# FASCICULE DE BREVET EUROPEEN

(11) **EP 4 133 330 B1**
(45) Date de publication et mention de la délivrance du brevet: **07.08.2024**
(21) Numéro de dépôt: 21718966.1
(22) Date de dépôt: 29.03.2021
(51) Int. Cl.: G02F 1/167, G02F 1/1675, G02F 1/1676, G02F 1/1677, G02F 1/16762, G02F 1/16761, G02F 1/1343

(54) **DISPOSITIF DE CONTRÔLE DE LA RÉFLECTIVITÉ INFRAROUGE**
VORRICHTUNG ZUR STEUERUNG DER INFRAROTREFLEKTIVITÄT
INFRARED REFLECTIVITY CONTROL DEVICE

(30) Priorité: 08.04.2020 FR 2003338
(43) Date de publication de la demande: 15.02.2023
(73) Titulaire: KNDS France, 78034 Versailles Cedex (FR); Institut Mines Telecom, 91120 Palaiseau (FR); CY Cergy Paris Université, 95011 Cergy-Pontoise Cedex (FR)
(72) Inventeur: DUPONT, Laurent, 91120 Palaiseau (FR); CHRUN, Jonathan, 91120 Palaiseau (FR); VANCAEYZEELE, Cedric, 95011 Cergy-Pontoise Cedex (FR); VIDAL, Frédéric, 95011 Cergy-Pontoise Cedex (FR); AUBERT, Pierre Henri, 95011 Cergy-Pontoise Cedex (FR); LEGALL, Stephen, 18023 Bourges Cedex (FR); FAGOUR, Sébastien, 18023 Bourges Cedex (FR); PETITPAS, Eric, 18023 Bourges Cedex (FR)
(74) Mandataire: Cabinet Chaillot
(86) Numéro de dépôt international: PCT/IB2021/052578
(87) Numéro de publication internationale: WO 2021/205280

(56) Documents cités:
- JP-A- S 604 828
- US-A1- 2008 211 764
- US-A1- 2009 295 765
- US-A1- 2018 046 055
- US-B2- 7 034 987

## Description

Le domaine technique de l'invention est celui des dispositifs permettant de contrôler la réflectivité infrarouge d'un support.

Le problème du contrôle de la réflectivité infrarouge d'un support se pose dans de nombreux domaines. On pourra citer ainsi, le contrôle de la température de structures soumises aux rayonnements solaire, par exemple les vitrages ou bien les satellites en orbite autour de la terre. Ce contrôle de la réflectivité est également rencontré dans le domaine militaire pour la conception de camouflages de véhicules, de structures fixes ou même de personnes.

On connaît dans le domaine du camouflage le brevet US2018/0267382 qui propose une structure comprenant deux réseaux d'électrodes croisées disposées de part et d'autre de cellules dans lesquelles se logent des billes renfermant un fluide chargé de particules de tailles et natures diverses.

Le réseau d'électrodes permet un adressage pixel par pixel et la commande sélective des cellules. Ce dispositif permet, associé à un moyen de commande adapté, de réaliser des motifs de camouflage de couleurs diverses et également un masquage infrarouge en mettant en oeuvre des particules réfléchissant ou bien absorbant l'infrarouge proche (longueur d'onde inférieure à 2 micromètres).

Une couche inférieure du dispositif permet d'assurer le blocage du rayonnement infrarouge, en particulier provenant de la structure à masquer. Les variations du champ électrique entre les électrodes permettent de répartir les particules pour obtenir le camouflage souhaité dans le domaine visible ou infrarouge proche.

Cette structure de dispositif est particulièrement complexe et ne permet pas de réaliser de façon efficace un masquage infrarouge d'un support, et en particulier dans le domaine de l'infrarouge moyen (domaine couvrant généralement les longueurs d'onde de 2,5 micromètres à 20 micromètres). Les particules ayant des masses et propriétés électriques multiples nuisent à l'efficacité du masquage en particulier dans le domaine de l'infrarouge.

Il est en particulier difficile d'assurer au choix une absorption du rayonnement infrarouge ou une réflexion de ce rayonnement, car chaque type de comportement est associé à des particules de natures différentes qui sont mélangées dans le même fluide et qu'il faut alors déplacer de façon différenciée.

On connaît aussi par le brevet US2008/211764 un afficheur permettant un contrôle de la réflectivité, afficheur utilisant un fluide transparent dans le domaine visible et chargé de particules. Cet afficheur utilise le phénomène de l'électrophorèse pour réaliser différents types d'affichages. Cependant cet afficheur se limite à contrôler la couleur de l'affichage entre le blanc et le noir ou entre deux ou plusieurs couleurs. Un tel afficheur ne permet pas de contrôler la réflectivité ou l'émissivité d'une cellule dans le domaine infrarouge moyen tel que défini précédemment. Il ne donne par ailleurs aucun détails sur les propriétés d'absorption ou de transparence du fluide dans cette gamme de longueur d'ondes.

On connaît également par le brevet US7034987 un afficheur électrophorétique pouvant engendrer une image colorée. Cet afficheur comporte un volume visible auquel est accolé au moins un réservoir pour les particules électrophorétiques. Le réservoir renferme au moins deux types de particules qui sont chacune transparente dans une première partie du spectre optique et absorbante ou réfléchissante pour une seconde partie du spectre. Cet afficheur permet d'augmenter le contraste et la luminosité de l'affichage mais il ne permet pas de contrôler la réflectivité ou l'émissivité infrarouge dans le domaine de l'infrarouge moyen.

Le document US2018/046055 illustre également l'arrièreplan technologique d'un dispositif de contrôle de la réflectivité infrarouge selon la revendication 1.

Le document JPS604828A divulgue un dispositif de contrôle de la réflectivité infrarouge comprenant au moins une cellule formant un boîtier comprenant un capot supérieur transparent dans le domaine infrarouge, une plaque de fond et au moins deux électrodes pouvant être connectées à un générateur électrique, le boîtier renfermant un fluide chargé de particules, le capot supérieur étant transparent dans le domaine des longueurs d'onde infrarouges, l'une des électrodes étant portée par la plaque de fond, les particules comprenant au moins un matériau pouvant être chargé électriquement (potentiel zêta non nul) et assurant la réflexion du rayonnement infrarouge.

C'est le but de l'invention que de proposer un dispositif de contrôle de la réflectivité infrarouge de conception simple qui assure d'une façon continue des performances visà-vis du rayonnement infrarouge qui vont de l'absorption du rayonnement à la réflexion du rayonnement.

Le dispositif selon l'invention est ainsi un dispositif à émissivité variable qui est plus particulièrement destiné à assurer un contrôle de la réflectivité dans le domaine des longueurs d'ondes de 2,5 micromètres à 20 micromètres (domaine correspondant à ce que l'on appelle généralement l'infrarouge moyen). Ce domaine incorpore en particulier les bandes II et III. Bande II : longueur d'onde de 3 micromètres à 5 micromètres. Bande III : longueurs d'onde de 8 micromètres à 12 micromètres.

Ainsi le dispositif selon l'invention constitue un dispositif permettant le contrôle effectif de l'émissivité infrarouge du support sur lequel il est appliqué, ce qui accroît fortement les capacités de masquage dans le domaine de l'infrarouge moyen.

De telles performances permettent d'assurer un excellent masquage infrarouge quelle que soit la nature de l'environnement de la structure à masquer.

Elles permettent également d'assurer un bon contrôle de la température du support, ce qui permet la réalisation de vitrages ou de parois isolantes.

Ainsi l'invention a pour objet un dispositif de contrôle de la réflectivité infrarouge comprenant au moins une cellule formant un boîtier comprenant un capot supérieur transparent dans le domaine visible et une plaque de fond portant au moins deux électrodes pouvant être reliées à un générateur électrique, le boîtier renfermant un fluide transparent dans le domaine visible et qui est chargé de particules, dispositif présentant en outre les caractéristiques suivantes :
- le capot supérieur (2) et le fluide (6) sont transparents dans le domaine de longueurs d'onde de 2,5 micromètres à 20 micromètres correspondant à l'infrarouge moyen ;
- les électrodes sont réfléchissantes dans le domaine infrarouge ;
- les électrodes sont portées par la plaque de fond et sont dissymétriques, une première électrode ayant une première surface et une deuxième électrode ayant une deuxième surface, la première surface étant supérieure à la deuxième surface ;
- les particules sont de granulométrie nanométrique et comprennent au moins un matériau susceptible d'être chargé électriquement (potentiel zêta non nul), la granulométrie étant choisie de façon à assurer l'absorption des infrarouges dans le domaine de longueurs d'onde de 2,5 micromètres à 20 micromètres.

Avantageusement, les électrodes pourront couvrir au moins 90% de la surface de la plaque de fond.

Avantageusement, la première surface sera bien supérieure à celle de la deuxième surface, par exemple la première surface sera au moins dix fois supérieure à la deuxième surface.

Selon un mode particulier de réalisation, les électrodes pourront être transparentes dans le domaine visible.

Selon un mode particulier de réalisation, les électrodes pourront être formées de bandes parallèles disposées en alternance, la première électrode comportant des bandes larges et la deuxième électrode comportant des bandes étroites, deux bandes larges consécutives étant séparées l'une de l'autre par une bande étroite.

Selon un mode particulier de réalisation les bandes pourront comporter une alternance de créneaux et de languettes.

Selon une première variante, les créneaux et languettes pourront être de formes rectangulaires.

Selon une seconde variante, les créneaux et languettes pourront être de formes triangulaires.

Avantageusement, le matériau susceptible d'être chargé pourra être un oxyde métallique dopé par un métal, ce matériau ayant une granulométrie comprise entre 40 et 80 nanomètres.

En particulier, le matériau susceptible d'être chargé pourra être choisi parmi les matériaux suivants : oxyde de zinc dopé à l'aluminium (Al : ZnO), oxyde de zinc dopé au Gallium (Ga : ZnO), oxyde de zinc dopé à l'Indium (In : ZnO), dioxyde de Titane dopé au Niobium (Nb : TiO2), oxyde d'Indium dopé à l'étain (ITO). L'ITO est concrètement un mélange d'oxyde d'Indium In2O3 et d'oxyde d'étain SnO2.

Avantageusement, le matériau pourra être présent dans le fluide avec une concentration de 10 à 60 milligrammes par millilitre.

L'invention sera mieux comprise à la lecture d'un descriptif détaillé fait en référence aux dessins annexés et dans lesquels :
[Fig. 1] montre de façon schématique un exemple de réalisation d'une cellule d'un dispositif de contrôle de la réflectivité selon l'invention ;
[Fig. 2] représente cette cellule en mode émissif ;
[Fig. 3] représente cette cellule en mode réflectif ;
[Fig. 4] représente en vue de face un premier exemple de réalisation des électrodes de la cellule ;
[Fig. 5] représente une cellule comportant des électrodes suivant ce premier exemple de réalisation, et vue en coupe suivant le plan dont la trace AA est repérée à la figure 4 ;
[Fig. 6a] représente en vue de face un deuxième exemple de réalisation des électrodes de la cellule ;
[Fig. 6b] représente en vue de face un troisième exemple de réalisation des électrodes de la cellule ;
[Fig. 7] est un schéma d'un dispositif de contrôle de la réflectivité infrarouge mettant en oeuvre plusieurs cellules ;
[Fig. 8] est un schéma montrant un dispositif de contrôle de la réflectivité infrarouge selon l'invention associé à des cellules de masquage dans le domaine visible.

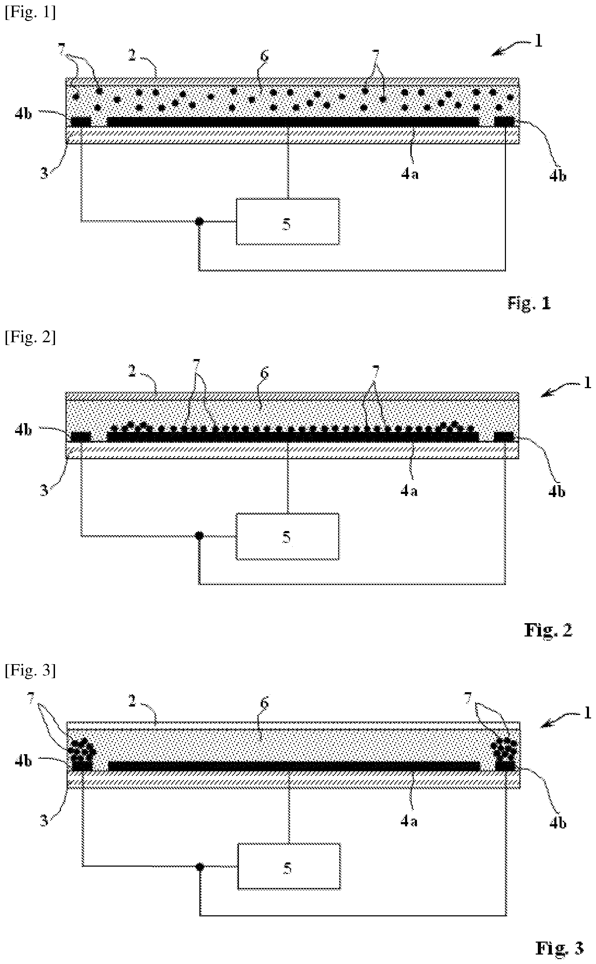

En se reportant à la figure 1, on a représenté de façon schématique une cellule 1 d'un dispositif de contrôle de la réflectivité infrarouge d'une structure, par exemple d'un véhicule (structure non représentée).

La cellule 1 forme un boîtier 1 comprenant un capot supérieur 2 qui est transparent dans les domaines visibles et celui des longueurs d'ondes de 2,5 micromètres à 20 micromètres (infrarouge moyen) et une plaque de fond 3 qui porte au moins deux électrodes 4a et 4b pouvant être reliées à un générateur électrique 5. Le boîtier 1 renferme un fluide 6 qui est transparent dans les domaines visibles et celui des longueurs d'ondes de 2,5 micromètres à 20 micromètres (infrarouge moyen) et qui est chargé de particules 7. A titre d'exemple on pourra utiliser comme fluide un hydrocarbure iso paraffinique du type de ceux vendus par la société Exxon Mobil sous la marque Isopar (de type L, M ou G). On pourra également mettre en oeuvre un alcane, tel que : octane, nonane, décane, undécane, dodécane, tridécane, tétradécane, hexadécane...

La plaque de fond 3 sera par exemple une plaque de verre et les électrodes 4a et 4b seront déposées sur cette plaque par les techniques classiques de dépôt en phase vapeur ou bien par sérigraphie.

Le capot 2 sera par exemple constitué par un film de polyéthylène. Sa seule fonction est d'assurer le maintien étanche du boîtier 1 renfermant le fluide 6 chargé de particules 7. D'autres matériaux transparents dans le domaine visible et celui des longueurs d'ondes de 2,5 micromètres à 20 micromètres (infrarouge moyen) seraient possibles, par exemple le parylène ou poly (p-xylylène).

Selon une caractéristique de l'invention les électrodes sont réalisées en un matériau réfléchissant dans le domaine infrarouge. Les électrodes 4a et 4b pourront par exemple être métalliques (dépôts de chrome sur la plaque 3 par exemple).

Selon un mode de réalisation particulier on pourra réaliser les électrodes 4a et 4b en un matériau qui est réfléchissant dans le domaine infrarouge et également transparent dans le domaine visible, par exemple en ITO ou en PEDOT-PSS. D'une façon bien connue de l'Homme du Métier, on désigne par ITO (ou Indium Tin Oxyde) un alliage d'oxyde d'indium (In₂O₃) et d'oxyde d'étain (SnO₂).

Le PDOT-PSS désigne pour sa part un mélange de deux polymères, le poly(3,4-éthylènedioxythiophène) (ou PEDOT) et le polystyrène sulfonate de sodium (ou PSS).

Le choix d'électrodes transparentes dans le domaine visible permet d'assurer une transparence de la cellule 1, ce qui autorise sa superposition avec toute autre technologie de camouflage efficace dans le domaine visible. Un camouflage visible pourra être une simple toile de camouflage statique ou bien un moyen de camouflage adaptatif, par exemple un camouflage à commande électronique. Une telle variante sera détaillée par la suite.

Selon une autre caractéristique de l'invention les électrodes 4a et 4b sont dissymétriques. Ainsi une première électrode 4a a une première surface et une deuxième électrode 4b a une deuxième surface et la première surface est supérieure à la deuxième surface. L'écart entre les valeurs de chaque surface permet de caractériser les positions extrêmes du point de vue réflexion ou absorption que peut adopter la cellule. Avantageusement on donnera un écart relativement important entre les valeurs des deux surfaces, on pourra par exemple adopter une première surface qui est au moins dix fois supérieure à la deuxième surface.

Sur la figure 1 on a montré de façon schématique une première électrode 4a positionnée au milieu de la plaque de fond 3 et une deuxième électrode 4b formée de deux petites barrettes disposées de part et d'autre de la première électrode 4a et à distance de celle-ci.

Les deux barrettes 4b sont reliées électriquement entre elles, soit par la connectique externe tel que représenté, soit par des pistes gravées (non représentées) portées par la plaque de fond 3.

Selon une autre caractéristique de l'invention les particules 7 sont de granulométrie nanométrique et elles comprennent au moins un matériau susceptible d'être chargé électriquement. Un tel matériau pouvant être chargé est souvent désigné comme ayant un potentiel zêta non nul.

Une granulométrie nanométrique pour un matériau pulvérulent est généralement inférieure à 100 nanomètres. Pour les particules 7 qui sont ici mises en oeuvre on choisira une granulométrie comprise entre 40 et 80 nanomètres. Cette fourchette correspond à l'optimum permettant d'assurer l'absorption des infrarouges dans le domaine de longueurs d'ondes de 2,5 micromètres à 20 micromètres (infrarouge moyen) et en particulier dans les bandes II et III qui sont les domaines d'observation des principaux détecteurs infrarouge.

Le choix d'un matériau à potentiel zêta non nul permet d'obtenir une suspension stable des particules 7 dans le fluide 6. Le choix d'une granulométrie nanométrique couplé au choix d'un matériau à potentiel zêta non nul (conducteur) permet de conférer des propriétés plasmoniques aux particules du matériau. L'effet plasmonique permet d'avoir une absorption très intense dans une bande de longueur d'onde bien définie. La granulométrie nanométrique permet également d'éviter l'effet de diffusion de la lumière dans le domaine visible.

Les propriétés plasmoniques d'un matériau granulaire ont en particulier pour avantage d'augmenter les capacités d'absorption infrarouge du matériau.

A titre d'exemple on pourra choisir comme matériau : un oxyde métallique dopé par un métal, par exemple oxyde de zinc dopé à l'aluminium (Al : ZnO).

Ce matériau est aisément approvisionnable. Le dopage des particules est d'environ 2% d'atomes d'aluminium contre 98% d'atomes de zinc. La maille cristalline de ces particules est de type würtzite.

D'une façon préférée le matériau présent dans le fluide aura une concentration de 10 à 60 milligrammes par millilitre.

Cette fourchette de concentration permet d'obtenir une modulation significative de la réflectivité et également permet d'obtenir une suspension stable.

Les essais ont permis de vérifier que, dans les bandes de fréquences infrarouges de 3 à 5 micromètres et de 8 à 12 micromètres, l'absorption infrarouge était environ 70% supérieure avec une concentration de 40 milligrammes par millilitre d'oxyde de zinc dopé à l'aluminium par rapport à une concentration de 10 milligrammes par millilitre.

On notera que, dans les mêmes bandes infrarouges, l'absorption d'un fluide chargé d'oxyde de zinc dopé à l'aluminium avec une concentration de 10 milligrammes par millilitre est de 25% à 50% supérieure à celle du fluide seul.

Ces chiffres montrent les performances d'absorption importantes du matériau granulaire qui est proposé.

La figure 2 montre la cellule 1 lorsque le générateur 5 applique une différence de potentiel entre les deux électrodes 4a et 4b. La charge de la première électrode 4a est ici supérieure à celle de la deuxième électrode 4b. Il en résulte un déplacement par électrophorèse des particules 7 dans le fluide 6 (ces particules sont naturellement chargées négativement). Ce déplacement s'effectue principalement dans un sens latéral par rapport à la cellule, c'est-à-dire parallèlement au capot 2 et à la plaque de fond 3.

Sensiblement toutes les particules 7 se trouvent ici concentrées sur la première électrode 4a (électrode large) et la deuxième électrode 4b est totalement dégagée.

Ainsi les particules 7 masquent la première électrode 4a dont la face réfléchissante se trouve couverte. Il en résulte un comportement émissif pour la cellule 1 qui ne réfléchit plus les infrarouges qu'elle peut recevoir de l'extérieur mais qui les absorbe au niveau des particules 7.

Inversement, figure 3, lorsque le générateur 5 inverse les potentiels entre les deux électrodes 4a et 4b, toutes les particules 7 se concentrent sur les deuxièmes électrodes 4b, laissant la première électrode 4a complètement dégagée. La première électrode 4a étant réfléchissante pour les infrarouges, la cellule 1 se trouve alors dans un mode réflecteur. Elle réfléchit sensiblement tous les infrarouges qui lui parviennent de l'extérieur.

On notera que, pour une cellule donnée, l'état le plus réflecteur des infrarouges (électrode 4a totalement libérée) et l'état le plus absorbeur des infrarouges - dit émissif - (électrode 4a totalement couverte) dépendront des surfaces relatives des deux électrodes. Il est donc particulièrement avantageux qu'il y ait un grand écart de surfaces entre les deux électrodes pour que les états réflecteur ou absorbeur de la cellule soient bien marqués.

Concrètement on appliquera une tension continue pour déplacer les particules d'une électrode à l'autre. La tension est coupée pour stopper le mouvement des particules. Suivant la durée d'application de la tension continue on aura une plus ou moins grande quantité de particules groupées sur les électrodes larges ou sur les électrodes étroites. On pourra donc doser de façon sensiblement continue l'état de la cellule entre son mode émissif et son mode réflecteur. Avantageusement on appliquera une tension alternative de faible fréquence (10 Hz) pour disperser les particules de façon homogène dans la cellule. Cette dispersion sera réalisée avant l'application d'un nouveau potentiel continu dans un sens ou dans l'autre.

Avantageusement les électrodes 4a et 4b (et plus particulièrement la première électrode 4a) couvrent au moins 90% de la surface de la plaque de fond. Le but est de conférer à la cellule des capacités réfléchissantes importantes lorsqu'elle se trouve dans son état réflecteur. Il faut donc que la plus grande partie de la surface de la plaque du fond 3 soit réfléchissante pour les infrarouges (grâce à la première électrode 4a).

Les figures 1 à 3 sont des figures schématiques permettant de montrer de façon plus claire le fonctionnement de la cellule selon l'invention.

Concrètement les électrodes 4a et 4b ont une forme particulière permettant d'assurer à la cellule une réflectivité maximale des infrarouges dans le mode réflecteur et également une répartition homogène des particules, gage d'une absorption maximale des infrarouges, dans le mode émissif.

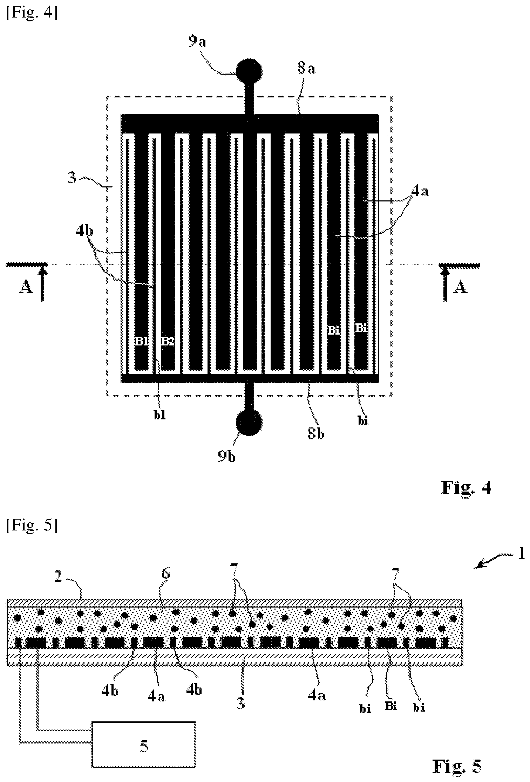

La figure 4 montre en vue de face la plaque de fond 3 d'une cellule 1 comportant un premier exemple de réalisation des électrodes 4a et 4b. Cette figure peut être étudiée parallèlement à la figure 5 qui montre la cellule 1 associée, en coupe suivant le plan dont la trace AA est représentée à la figure 4.

Comme on le voit à la figure 4, les électrodes 4a et 4b sont formées de bandes parallèles qui sont disposées en alternance. La première électrode 4a comporte des bandes larges Bi et la deuxième électrode 4b comporte des bandes étroites bi, deux bandes larges B1 et B2 consécutives étant séparées l'une de l'autre par une bande b1 étroite.

Toutes les bandes larges Bi sont reliées électriquement les unes aux autres par une première barrette 8a.

Toutes les bandes étroites bi sont reliées électriquement les unes aux autres par une deuxième barrette 8b.

La première barrette 8a est reliée électriquement à une première piste de connexion 9a.

La deuxième barrette 8b est reliée électriquement à une deuxième piste de connexion 9b.

Ainsi lorsque la cellule 1 se trouve à l'état réflecteur, toutes les particules 7 se trouvent groupées sur les bandes étroites bi. Les bandes larges Bi sont alors dégagées et la surface réfléchissant les infrarouges est maximale.

Lorsqu'inversement la cellule 1 se trouve à l'état émissif, toutes les particules 7 se trouvent groupées sur les bandes larges Bi. La surface des bandes étroites bi est très inférieure à celle des bandes larges Bi et l'absorption des infrarouges par les particules est maximale.

Bien entendu les largeurs des bandes larges et des bandes étroites ainsi que la largeur des espaces qui les séparent peuvent être modifiées. L'important est d'avoir toujours au niveau de la cellule un écart de surface important entre les bandes larges et les bandes étroites tout en couvrant un maximum de la surface de la plaque de fond 3.

On a pu ainsi tester des bandes larges dont la largeur variait entre 200 micromètres et 500 micromètres associées à des bandes étroites de 20 micromètres de large.

L'espace entre les bandes larges et étroites a pu être varié entre 110 micromètres et 20 micromètres.

D'autres formes sont possibles pour la première électrode 4a et la seconde électrode 4b.

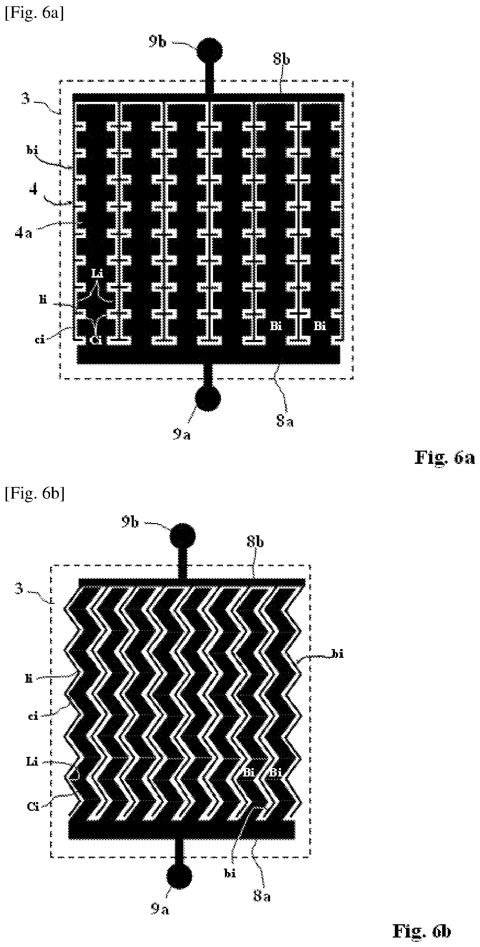

La figure 6a montre ainsi des bandes larges Bi et étroites bi qui comportent chacune une alternance de créneaux Ci/ci et de languettes Li/li. Chaque languette li d'une bande étroite bi se loge dans un créneau Ci d'une bande large Bi. Parallèlement chaque languette Li d'une bande large Bi se loge dans un créneau ci d'une bande étroite bi.

Sur le mode de réalisation de la figure 6a, les créneaux et languettes sont par ailleurs de forme rectangulaires.

Il résulte de ce mode de réalisation une couverture de la surface de la plaque de fond qui est supérieure. Cette variante permet également de réduire les accumulations de particules.

La figure 6b montre un autre mode de réalisation qui est analogue à celui de la figure 6a mais pour lequel les créneaux Ci/ci et languettes Li/li sont de formes triangulaires.

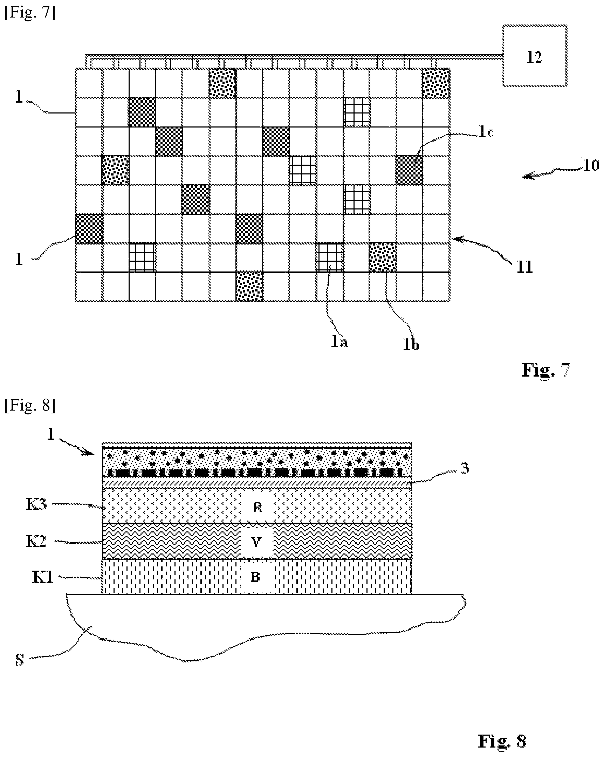

La figure 7 montre un dispositif 10 de contrôle de la réflectivité infrarouge qui met en oeuvre plusieurs cellules 1 assemblées sur un support commun 11, par exemple une toile ou bien une plaque rigide portée par une structure.

Toutes les cellules 1 ont une structure du type de celles décrites précédemment. Mais chaque cellule 1 peut être commandée de façon individuelle par un moyen de commande 12 doté de moyens lui permettant par adressage d'appliquer une tension particulière à chaque cellule 1 pour lui donner un état émissif ou réflecteur particulier.

Cet état sera défini par un moyen de calcul incorporé au moyen de commande 12 et qui sera associé par exemple à un moyen caméra lui permettant de déterminer les caractéristiques d'émission ou d'absorption infrarouge du milieu entourant la structure portant le dispositif. On pourra par exemple consulter le brevet EP2992292 qui décrit un tel dispositif.

Il devient ainsi possible de donner au dispositif 10 une signature infrarouge particulière variable de cellule en cellule.

A titre d'exemple on a représenté à la figure 7 des cellules 1a,1b,1c ayant des états émissif ou réflecteur différents.

La figure 8 montre une cellule 1 dont la plaque de fond 3 est transparente dans le domaine visible. Elle est positionnée sur trois cellules K1, K2 et K3 renfermant des cristaux liquides cholestériques permettant d'obtenir une coloration qui est respectivement : bleue pour K1, verte pour K2 et rouge pour K3. Chaque cellule K1,K2 et K3 peut être commandée de façon individuelle par un moyen de commande avec un dosage plus ou moins intense de chaque couleur.

Des cellules permettant ainsi d'obtenir des couleurs avec un niveau d'intensité plus ou moins fort sont connus, par exemple du brevet EP3213146.

L'empilement des cellules 1, K1, K2 et K3 est fixé sur une structure S à camoufler.

Grâce à l'invention il devient possible de combiner le masquage dans le domaine visible assuré par les cellules K1, K2 et K3 avec un masquage infrarouge assuré par la cellule 1.

Il est bien sûr également possible d'associer les cellules 1 à un support dont le motif de camouflage est fixe.

## Revendications

1. Dispositif de contrôle de la réflectivité infrarouge comprenant au moins une cellule (1) formant un boîtier comprenant un capot supérieur (2) transparent dans le domaine visible, une plaque de fond (3) et au moins deux électrodes (4a,4b) pouvant être reliées à un générateur électrique (5), le boîtier renfermant un fluide (6) transparent dans le domaine visible et qui est chargé de particules (7),
le capot supérieur (2) et le fluide (6) étant transparents dans le domaine de longueurs d'onde de 2,5 micromètres à 20 micromètres ;
les électrodes (4a,4b) étant portées par la plaque de fond et étant réfléchissantes dans le domaine infrarouge ;
les électrodes (4a,4b) étant dissymétriques, une première électrode (4a) ayant une première surface et une deuxième électrode (4b) ayant une deuxième surface, la première surface étant supérieure à la deuxième surface ;
et les particules (7) étant de granulométrie nanométrique et comprennent au moins un matériau susceptible d'être chargé électriquement, donc ayant un potentiel zêta non nul, la granulométrie étant choisie de façon à assurer l'absorption des infrarouges dans le domaine de longueurs d'onde de 2,5 micromètres à 20 micromètres.

2. Dispositif de contrôle de la réflectivité infrarouge selon la revendication 1, **caractérisé en ce que** les électrodes (4a,4b) couvrent au moins 90% de la surface de la plaque de fond (3).

3. Dispositif de contrôle de la réflectivité infrarouge selon une des revendications 1 ou 2, **caractérisé en ce que** la première surface est au moins dix fois supérieure à la deuxième surface

4. Dispositif de contrôle de la réflectivité infrarouge selon une des revendications 1 à 3, **caractérisé en ce que** les électrodes (4a,4b) sont transparentes dans le domaine visible.

5. Dispositif de contrôle de la réflectivité infrarouge selon une des revendications 1 à 4, **caractérisé en ce que** les électrodes (4a,4b) sont formées de bandes (Bi,bi) parallèles disposées en alternance, la première électrode (4a) comportant des bandes larges (Bi) et la deuxième électrode (4b) comportant des bandes étroites (bi), deux bandes larges consécutives étant séparées l'une de l'autre par une bande étroite.

6. Dispositif de contrôle de la réflectivité infrarouge selon la revendication 5, **caractérisé en ce que** les bandes (Bi,bi) comportent une alternance de créneaux et de languettes.

7. Dispositif de contrôle de la réflectivité infrarouge selon la revendication 6, **caractérisé en ce que** les créneaux et languettes sont de formes rectangulaires.

8. Dispositif de contrôle de la réflectivité infrarouge selon la revendication 6, **caractérisé en ce que** les créneaux et languettes sont de formes triangulaires.

9. Dispositif de contrôle de la réflectivité infrarouge selon une des revendications 1 à 8, **caractérisé en ce que** le matériau susceptible d'être chargé est un oxyde métallique dopé par un métal, ce matériau ayant une granulométrie comprise entre 40 et 80 nanomètres.

10. Dispositif de contrôle de la réflectivité infrarouge selon la revendication 9, **caractérisé en ce que** le matériau susceptible d'être chargé est choisi parmi les matériaux suivants : oxyde de zinc dopé à l'aluminium (Al :
ZnO), oxyde de zinc dopé au Gallium (Ga : ZnO), oxyde de zinc dopé à l'Indium (In : ZnO), dioxyde de Titane dopé au Niobium (Nb : TiO2), oxyde d'Indium dopé à l'étain (ITO).

11. Dispositif de contrôle de la réflectivité infrarouge selon la revendication 10, **caractérisé en ce que** le matériau est présent dans le fluide (6) avec une concentration de 10 à 60 milligrammes par millilitre.

## Patentansprüche

1. - Vorrichtung zur Kontrolle des Infrarot-Reflexionsvermögens, umfassend mindestens eine Zelle (1), die ein Gehäuse bildet, umfassend eine obere Abdeckung (2), die im sichtbaren Bereich transparent ist, eine Bodenplatte (3) und mindestens zwei Elektroden (4a, 4b), die mit einem elektrischen Generator (5) verbunden werden können, wobei das Gehäuse ein Fluid (6) umschließt, das im sichtbaren Bereich transparent ist und mit Partikeln (7) beladen ist, wobei die obere Abdeckung (2) und das Fluid (6) in dem Wellenlängenbereich von 2,5 Mikrometern bis 20 Mikrometern transparent sind;
wobei die Elektroden (4a, 4b) von der Bodenplatte getragen werden und im Infrarotbereich reflektierend sind;
die Elektroden (4a, 4b) asymmetrisch sind, wobei eine erste Elektrode (4a) eine erste Oberfläche aufweist und eine zweite Elektrode (4b) eine zweite Oberfläche aufweist, wobei die erste Oberfläche größer ist als die zweite Oberfläche;
wobei die Partikel (7) eine nanometrische Korngröße aufweisen und mindestens ein Material umfassen, das elektrisch geladen werden kann, also ein Zeta-Potential ungleich Null aufweist, wobei die Korngröße gewählt ist, um die Absorption von Infrarotstrahlung in dem Wellenlängenbereich von 2,5 Mikrometern bis 20 Mikrometern zu gewährleisten.

2. - Infrarot-Reflexionsprüfvorrichtung nach Anspruch 1, **dadurch gekennzeichnet, dass** die Elektroden (4a, 4b) mindestens 90 % der Oberfläche der Bodenplatte (3) bedecken.

3. - Vorrichtung zur Kontrolle des Infrarot-Reflexionsvermögens nach einem der Ansprüche 1 oder 2, **dadurch gekennzeichnet, dass** die erste Fläche mindestens zehnmal größer ist als die zweite Fläche.

4. - Vorrichtung zur Kontrolle des Infrarot-Reflexionsvermögens nach einem der Ansprüche 1 bis 3, **dadurch gekennzeichnet, dass** die Elektroden (4a, 4b) im sichtbaren Bereich transparent sind.

5. - Vorrichtung zur Kontrolle des Infrarot-Reflexionsvermögens nach einem der Ansprüche 1 bis 4, **dadurch gekennzeichnet, dass** die Elektroden (4a, 4b) aus abwechselnd angeordneten parallelen Streifen (Bi, bi) gebildet sind, die erste Elektrode (4a) umfassend breite Streifen (Bi) und die zweite Elektrode (4b) umfassend schmale Streifen (bi), wobei zwei aufeinanderfolgende breite Streifen durch einen schmalen Streifen voneinander getrennt sind.

6. - Vorrichtung zur Kontrolle des Infrarot-Reflexionsvermögens nach Anspruch 5, **dadurch gekennzeichnet, dass** die Streifen (Bi,bi) von eine Abfolge von Zacken und Zungen aufweisen.

7. - Vorrichtung zur Kontrolle des Infrarot-Reflexionsvermögens nach Anspruch 6, **dadurch gekennzeichnet, dass** die Zacken und Zungen rechteckig geformt sind.

8. - Vorrichtung zur Prüfung des Infrarot-Reflexionsvermögens nach Anspruch 6, **dadurch gekennzeichnet, dass** die Zacken und Zungen dreieckig geformt sind.

9. - Vorrichtung zur Kontrolle des Infrarot-Reflexionsvermögens nach einem der Ansprüche 1 bis 8, **dadurch gekennzeichnet, dass** das aufladbare Material ein metalldotiertes Metalloxid ist, wobei das Material eine Korngröße zwischen 40 und 80 Nanometern umfasst.

10. - Vorrichtung zur Kontrolle des Infrarot-Reflexionsvermögens nach Anspruch 9, **dadurch gekennzeichnet, dass** das aufladbare Material ausgewählt ist aus den folgenden Materialien: mit Aluminium dotiertes Zinkoxid (Al:ZnO), mit Gallium dotiertes Zinkoxid (Ga:ZnO), mit Indium dotiertes Zinkoxid (In:ZnO), mit Niob dotiertes Titandioxid (Nb:TiO2), mit Zinn dotiertes Indiumoxid (ITO).

11. - Vorrichtung zur Kontrolle des Infrarot-Reflexionsvermögens nach Anspruch 10, **dadurch gekennzeichnet, dass** das Material in dem Fluid (6) mit einer Konzentration von 10 bis 60 Milligramm pro Milliliter vorhanden ist.

## Claims

1. - An infrared reflectivity control device comprising at least one cell (1) forming a housing comprising an upper cover (2) transparent in the visible range, a bottom plate (3) and at least two electrodes (4a, 4b) which can be connected to an electric generator (5), the housing containing a fluid (6) which is transparent in the visible range and is loaded with particles (7),
wherein the upper cover (2) and the fluid (6) are transparent in the wavelength range from 2.5 micrometers to 20 micrometers;
wherein the electrodes (4a, 4b) are carried by the bottom plate and are reflecting in the infrared range;
wherein the electrodes (4a, 4b) are unsymmetrical, a first electrode (4a) having a first surface area and a second electrode (4b) having a second surface area, the first surface area being greater than the second surface area; and
wherein the particles (7) have nanometric particle size and comprise at least one material which can be electrically charged, thus having a non-zero zeta potential, the particle size being chosen so as to provide infrared absorption in the wavelength range from 2.5 micrometers to 20 micrometers.

2. - The infrared reflectivity control device according to claim 1, **characterised in that** the electrodes (4a, 4b) cover at least 90% of the surface area of the bottom plate (3).

3. - The infrared reflectivity control device according to one of claims 1 or 2, **characterised in that** the first surface area is at least ten times greater than the second surface area.

4. - The infrared reflectivity control device according to one of claims 1 to 3, **characterised in that** the electrodes (4a, 4b) are transparent in the visible range.

5. - The infrared reflectivity control device according to one of claims 1 to 4, **characterised in that** the electrodes (4a, 4b) are formed from parallel strips (Bi, bi) arranged in an alternating manner, the first electrode (4a) including wide strips (Bi) and the second electrode (4b) including narrow strips (bi), two consecutive wide strips being separated from each other by a narrow strip.

6. - The infrared reflectivity control device according to claim 5, **characterised in that** the strips (Bi, bi) include an alternation of slots and tabs.

7. - The infrared reflectivity control device according to claim 6, **characterised in that** the slots and the tabs have rectangular shapes.

8. - The infrared reflectivity control device according to claim 6, **characterised in that** the slots and the tabs have triangular shapes.

9. - The infrared reflectivity control device according to one of claims 1 to 8, **characterised in that** the material which can be charged is a metal oxide doped with a metal, the material having a particle size comprised between 40 and 80 nanometers.

10. - The infrared reflectivity control device according to claim 9, **characterised in that** the material which can be charged is chosen from the following materials: aluminum-doped zinc oxide (Al: ZnO), galliumdoped Zinc Oxide (Ga: ZnO), indium-doped Zinc Oxide (In: ZnO), niobium-doped titanium dioxide (Nb: TiO2), tin-doped indium oxide (ITO).

11. - The infrared reflectivity control device according to claim 10, **characterised in that** the material is present in the fluid (6) at a concentration of 10 to 60 milligrams per milliliter.
